# EUROPÄISCHE PATENTSCHRIFT

(11) **EP 1 205 693 B1**
(45) Veröffentlichungstag und Bekanntmachung des Hinweises auf die Patenterteilung: **05.03.2008**
(21) Anmeldenummer: 01126896.8
(22) Anmeldetag: 12.11.2001
(51) Int. Cl.: F16J 15/20, F16J 15/12, F16J 15/30

(54) **Modifiziertes Grafit-Dichtungssystem**
Graphite sealing system
Dispositif de joint graphite

(30) Priorität: 13.11.2000 DE 10056896
(43) Veröffentlichungstag der Anmeldung: 15.05.2002
(73) Patentinhaber: Köthener Spezialdichtungen GmbH, 06369 Kleinwülknitz (DE)
(72) Erfinder: Kästner, Jürgen, Dr., 06366 Köthen (DE)
(74) Vertreter: Voigt, Wolf-Rüdiger

(56) Entgegenhaltungen:
- EP-A- 0 803 666
- DE-A- 3 745 040
- DE-A- 4 338 162
- DE-A- 19 804 289

## Beschreibung

Die Erfindung betrifft eine Anordnung von organischen und anorganischen Komponenten in Packungen der Spindelabdichtungen von Schiebern, Ventilen sowie Armaturen, Flanschverbindungen u. a., insbesondere in der Petrolchemie und ähnlich hochsensiblen Bereichen, bei denen ein sehr hoher Sicherheitsstandard eingehalten werden muß wenn es darum geht, unter den Bedingungen hoher Temperatur und hohen Druckes der zu fördernden Medien eine havarieartige Zerstörung der Abdichtmaterialien, in der Regel Grafit, in Verbindung mit Sauerstoff zu verhindern.

Aus der Patent- und Fachliteratur sind bereits eine Vielzahl von Möglichkeiten des Abdichtens und der Verwendung unterschiedlichster Materialkombinationen bekannt, die aber immer ein nicht unerhebliches Restrisiko bzgl. der Entzündlichkeit der Packungswerkstoffe offenlassen.

Ausgehend von der Forderung, die oftmals zu Spaltextrusion neigenden Stopfbuchspackungen in der Ausführung von Massivgrundringen hinsichtlich der Kammerungswirkung weiter zu vervollkommnen und dabei auch bzgl. der Dimension geringere Packungshöhen zu erzielen wurde gefunden, daß beispielsweise die in üblichen Packungen angeordneten Massivgrundringe durch gewollte exzentrische Schichtung und hoher Pressung die Querschnittsdichtheit und damit die Packungsextrusion wirksam bekämpft werden können. Diese Packungen in Kombination mit PTFE sind nahezu extrusions- und wartungsfrei und eignen sich für übliche Spindel-, Flansch- oder Deckelabdichtungen bei Temperaturen von bis zu 250° C.
Diese exzentrisch gelagerten Kammerungsringe erlauben es zudem, die Bauhöhe der eingebrachten Packung wesentlich zu reduzieren und Varianten zu entwickeln, die sich der Kammerung aus Reingrafitscheiben oder in Kombination mit speziell eingelagerten metallischen, aus gerastertem Federstahl geformten Ringen, bedienen.
Zusätzlich wurde bereits vorgesehen, daß bzgl. der Einsatzbedingungen erhöhter Temperatur (bis 500° C) und Druckes (bis 400 bar) ein oder mehrere Wärmeleitringe am z. B. hochbelasteten, niederdruckseitigen Ende einer Pumpenstopfbuchse in Verbindung mit einer sogenannten Wattpackung (zur Druckdrosselung) eingesetzt werden.
Die im Normalfall eingesetzten Reingrafit- und PTFE-Packungen werden im Kraftwerks- und Chemieanlagenbau bei Temperaturen von bis zu 400° C jeweils beidseitig mit in unterschiedlichen Ebenen (um 90° versetzte) strukturierte, gerasterte Federstahlscheiben in mehrfacher Schichtung eingefaßt, wodurch bei Belastung ein inniger Verbund mit dem Reingrafit bzw. PTFE herstellbar ist und eine elastische selbsttätige Nachstellung zur Sicherung der Abdichtung erreichbar ist. Genau in diese Richtung zielt die Lösung der DE 43 38 162 A1. Weiter wird gemäß DE 28 29 333 ein aus einem Flachmaterial gebildeter Dichtungsring geformt, der äußerlich metallverstärkt ist und im Inneren eine hitzebeständige Einlage besitzt. Diese in Abgasanlagen von Kfz. eingesetzte Variante ist zwar nicht brennbar, kann aber nicht für hohe Drücke in Chemieanlagen verwendet werden, wobei hier außerdem die Dicht- und vor allem Schmierwirkung von Reingrafit nicht im Vordergrund steht.

In der DE 198 53 472 A1 wird eine plattenförmige dauerelastische Hochtemperaturdichtung für Abgasanlagen von Verbrennungsmotoren vorgeschlagen. Diese als Flachdichtung ausgeführte Form besitzt einen metallverstärkten inneren Aufbau aus Grafit, der jeweils deck- und bodenseitig durch aus Glimmer bestehenden Materialien abgedeckt ist. Diese Lösung ist mehr für Dichtungen ausgelegt, die auf Flächenpressung und mit hohen Temperaturen beansprucht werden und ist so nicht für Stopfbuchsabdichtungen mit dem vorliegendem Schichtaufbau verwendbar, um den innenliegenden Grafit vor extrudierendem Sauerstoff zu schützen.

In EP 0 640 782 A1 wird ebenfalls eine Auspuffdichtung vorgestellt, die äußerlich von einer mit Erhöhungen versehenen Metallumhüllung umgeben ist, wobei sich in ihrem Inneren metallverstärktes Grafit befindet. Die Erhöhungen sind als "Dichtlippen" in der Nähe des Randes einer abzudichtenden Öffnung angeordnet. Auch dieser Schichtaufbau kann nicht für Spindelabdichtungen in Stopfbuchsen bzw. als Flachdichtungen für Armaturen vorgesehen werden, die unter sehr hohem Druck und hoher Temperatur stehen sowie bei denen die Gefahr des Verbrennens des eingelagerten Grafits besteht.

Diese in vorgenannter Art beschriebenen Weichstoffdichtungen für den allgemeinen und speziellen Maschinen- bzw. Chemieanlagenbau können jedoch nicht für Stopfbuchsabdichtungen, Druckverschlüssen, Flanschabdichtungen an Sauerstoffanlagen eingebaut werden, da hier durch die vorliegenden hohen Drücke (130 bar) und Temperaturen (400° C), dies sind mindestens zu garantierende Standardwerte, eine sofortige Zerstörung der Packungswerkstoffe mit unübersehbaren Folgen für die übrigen Anlagenteile abzusehen wäre.

Es ist deshalb Aufgabe der Erfindung die bisher bekannten Weichstoffdichtungen und auch in ihren Varianten derart weiterzubilden, daß ihr Einsatz grundsätzlich ebenso in hochsensiblen Anlagen der Chemieindustrie möglich wird, insbesondere dann, wenn anderenfalls ein ungehinderter Angriff von hochgespanntem Sauerstoff zur Entzündung und Zerstörung der Packungswerkstoffe führen muß.

Erfindungsgemäß wird die Aufgabe durch die im Kennzeichen des ersten Patentanspruches geschilderten Merkmale gelöst. Die weitere Ausgestaltung erfolgt in den Ansprüchen 2 bis 6.

Eine in bekannter Weise vorliegende Kompaktpackung, bestehend aus ggf. exzentrisch eingelagerten Reingrafit-Kammerungsringen und mit jeweils beiderseits versehenen Metall-Lamellen wird dahingehend verändert, daß in die Metall-Lamellen, d. h. zwischen diese in wechselnder Schichtung, Schichten mineralischen Glimmers eingebettet sind, wobei deren Durchmesserverhältnisse zueinander gewollt unterschiedlich gehalten sind. Es wird eine einseitige Spaltbreitenüberbrückung ≤ 0,5 x Packungsbreite angestrebt.
Diese jeweils an der medienzu- und medienabgewandten Seite befindlichen Metall-Lamellen/Glimmer-Schichtungen schließen die vorhandene Weichpackung des Reingrafits wesentlich ein, wobei die Weichpackung selbst noch zusätzlich in herkömmlicher Weise mit Strukturmetalleinlagen verstärkt werden kann und zur Stabilisierung, z. B. bei Flanschabdichtungen in der zentralen Zone der Packung ein Trägerblech oder eine Edelstahlfolie vorgesehen werden kann. Die Metall-Lamellen/Glimmer-Schichtungen werden letztlich durch Spießblech eingefaßt.

Die Erfindung soll nachfolgend an einem Ausführungsbeispiel näher erläutert werden.
Dabei soll auf die nachstehend genannten Figuren zurückgegriffen werden:

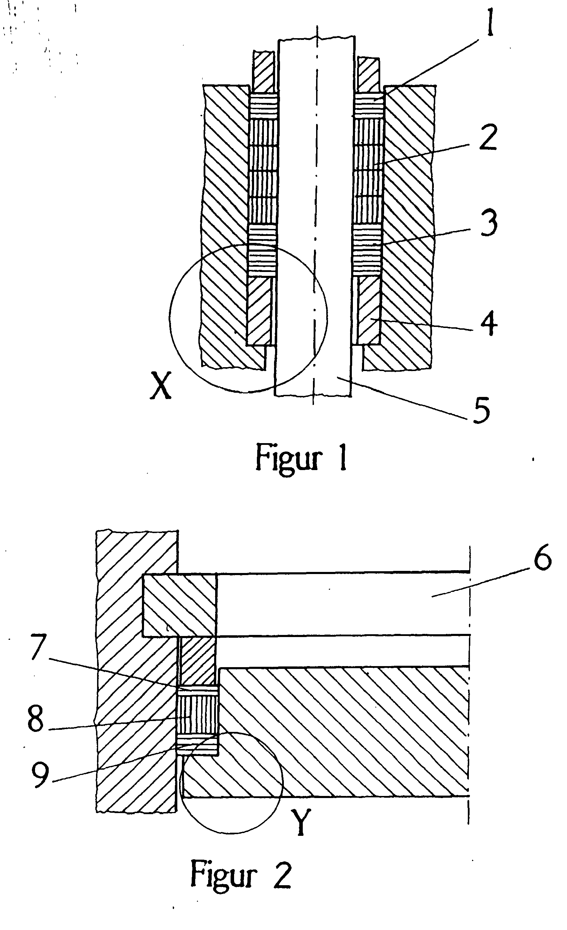

Figur 1: Spindelabdichtung
Figur 2: Deckelabdichtung

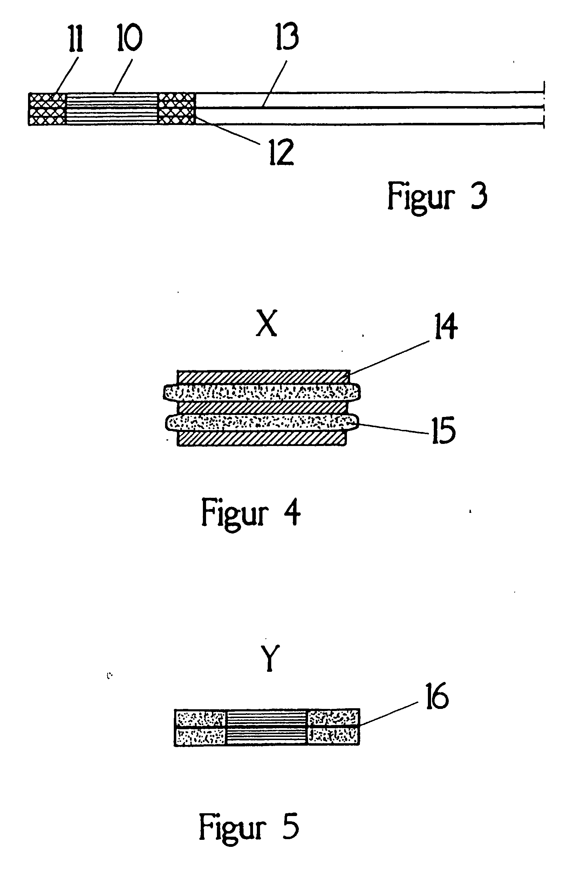

Figur 3: Flanschabdichtung
Figur 4: Einzelheit "X" Metall-Lamellen/Glimmer-Schichtung (Spindelabdichtung)
Figur 5: Einzelheit "Y" Deckelabdichtung
Figur 6: Flanschabdichtung (Spiraldichtung)

Die darin genannten Bezugszeichen haben die Bedeutung:

| | | | |
|---|---|---|---|
| 1 - | Metall-Lamellen/Glimmer-Schichtung | 12 - | Spießblecheinfassung |
| 2 - | Reingrafit | 13 - | Edelstahlfolie |
| 3 - | Metall-Lamellen/Glimmer-Schichtung | 14 - | Metall-Lamelle |
| 4 - | Distanzbuchse | 15 - | Glimmer |
| 5 - | Spindel | 16 - | Trägerblech |
| 6 - | Deckel | 17 - | Innenring |
| 7 - | Metall-Lamellen/Glimmer-Schichtung | 18 - | Außenring |
| 8 - | Reingrafit | 19 - | Metall-Lamellen/Glimmer-Schichtung |
| 9 - | Metall-Lamellen/Glimmer-Schichtung | 20 - | Reingrafit |
| 10 - | Reingrafit, metallverstärkt | 21 - | Metall-Lamellen/Glimmer-Schichtung |
| 11 - | Metall-Lamellen/Glimmer-Schichtung | 22 - | Metall-Lamelle mit Sicke |

Die im Ausführungsbeispiel geschilderte Konzeption ist besonders darauf ausgelegt, den im Inneren befindlichen Reingrafit mit seiner ausgezeichneten Dicht- und Schmierwirkung vor dem ungehinderten Zugang von Sauerstoff zu schützen wenn es darum geht, Temperaturen oberhalb von 400° C zu realisieren und die fire safe-Zulassung nach British Standard mit ihren Grenzwerten einzuhalten bzw. noch deutlich zu unterbieten.
Die Stopfbuchspackung bestehend aus Reingrafit 2, einer Spindel 5 erhält beiderseits in wechselnder Schichtfolge angeordnete Metall-Lamellen/Glimmer-Schichtungen 1, 3, wobei im Zustand des Einbaus eine definierte Vorspannung zur Spaltüberbrückung im Bereich der Metall-Lamellen/Glimmer-Schichtungen 1, 3 führt. Die Auflage der Anordnung insgesamt ist durch die Distanzbuchse 4 gegeben.
Bei Deckelabdichtungen ist die Packungsbreite, wie auch bei Spindelabdichtungen so bemessen, daß die medienzugewandten Seiten Metall-Lamellen/Glimmer-Schichtungen 3, 9 gegenüber der medienabgewandten Seiten 1, 7 stärker ausgebildet sind.
Die jeweils zwischen diesen, fast hermetisch abgeschirmten, angeordneten Reingrafit- 2, 8 oder anderen Weichstoffdichtungen sind entsprechend der zu erwartenden Extrusionsfahnen ein-oder mehrfach vorhanden und zusätzlich mit federndem Strukturmetall, z. B. Reingrafit, metallverstärkt 10, versehen.

Bei Flanschabdichtungen im Hochtemperaturbereich, kann vorteilhafterweise die Dichtungsbreite mittels der guten Dichteigenschaften des Materialverbundes Metall-Lamelle 14 Glimmer 15 in Richtung einer Flachdichtung minimiert werden, was sich positiv bzgl der Metall-Lamellen/Glimmer-Schichtung 11 auswirkt. Dies ist gerade im Armaturenbau, aber auch überall dort, wo geringe Stegbreiten der Dichtung eine metallische Bördelung unmöglich machen, von besonderem Vorteil.
Mit sogenannten Spießblech 12 kann die Kombination Metall-Lamellen/Glimmer-Schichtung 11 eingefaßt sein, wobei noch mittig ein Trägerblech 16 oder die Edelstahlfolie 13 vorsehbar ist.

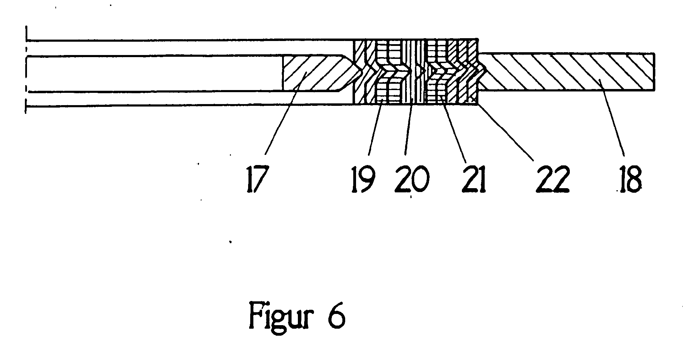

Als weitere Option kann beispielsweise nach Figur 6 für Flanschabdichtungen der Aufbau einer Spiraldichtung vorgesehen werden. Hierbei besitzen die in dieser Form auch zu bezeichnenden "Flachdichtungen" im Innen- und Außenbereich, anliegend an einem Innen- und Außenring 17, 18, die Metall-Lamellen mit Sicke 22, wobei sich daran in überlappender Folge Metall-Lamellen/Glimmer-Schichtungen 21. Lagen metallverstärkten Reingrafits 20 sowie die nach innen schützenden Lagen der Metall-Lamellen/Glimmer-Schichtungen 19 und abschließend Lagen von Metall-Lamellen mit Sicke 22 anfügen.
Dieses Ausführungsbeispiel eignet sich besonders bei Flanschen mit glatter Dichtleiste. Es bestehen jedoch auch Einsatzmöglichkeiten ohne Innen- und Außenring 17, 18 (bei Flanschen mit Nut und Feder) sowie nur mit Innenring 17 (bei Flanschen mit Vor- und Rücksprung).

Die besondere Ausbildung der Metall-Lamellen mit Sicke 22 bietet den Vorteil, daß unter Aufbringung einer definierten Vorspannung in die Flanschverschraubung eine beabsichtigte Rückfederung von der Dichtung selbst ausgeht und somit aktiv, bis zum Lösen der Verbindungsmittel, die Funktionssicherheit unterstützt wird.

Das erfindungsgemäße Dichtungssystem weist hauptsächlich folgende Vorteile auf:
- Vorherrschende Sauerstoff-Prozeßparameter (auch unvorhergesehene Extremata) treffen auf das reaktionsneutrale Glimmer.
- Die auf den Werkstoff Reingrafit treffenden Parameter (vor allem auch unvorhergesehene Extremata) werden durch die Drossel- und Isolierwirkung des Glimmers wesentlich abgemindert.
- Das Sauerstoff-Volumen ist als Reaktionsvolumen auf ein Minimum gesenkt.
- Fremdzündquellen, die sich im System befinden können, treffen immer auf die nichtentzündliche Glimmerschutzzone. Ein Vordringen zum Reingrafit ist praktisch unmöglich, da bei Temperaturen ab 400° C das mineralische Glimmer 15 entlang und seitlich an den eingelagerten Metall-Lamellen 14 aufquillt und den sich in etwa konisch von innen nach außen, bei hohem Druck des beförderten Mediums, ausbildenden Spalt zwischen den Dichtflächen ausfüllt.

## Patentansprüche

1. Modifiziertes Grafit-Dichtungssystem, **gekennzeichnet dadurch, daß** Reingrafit (2), (8)-Packungen in variabler Packungsbreite beiderseitig mit einem Materialverbund, bestehend aus Metall-Lamellen (14) und Glimmer (15) eingefaßt sind, wobei dieser Materialverbund in Richtung der medienzugewandten Seite eine größere Packungsbreite gegenüber der medienabgewandten besitzt.

2. Modifiziertes Grafit-Dichtungssystem nach Anspruch 1, **gekennzeichnet dadurch, daß** eine einseitige Spaltbreitenüberbrückung ≤ 0,5 x Packungsbreite vorgesehen ist.

3. Modifiziertes Grafit-Dichtungssysfem nach Anspruch 1, **gekennzeichnet dadurch, daß** die Reingrafit (10)-Packungen metallverstärkt sind und in Verbindung mit den Metall-Lamellen/Glimmer-Schichtungen (11) als Flachdichtung ausgebildet sind.

4. Modifiziertes Grafit-Dichtungssystem nach Anspruch 3, **gekennzeichnet dadurch, daß** die Flachdichtung aus spiralförmig angeordneten Lagen Metall-Lamellen mit Sicke (22), Metall-Lamellen/Glimmer-Schichtungen (21), Reingrafit (20) und Metall-Lamellen mit Sicke (22) besteht.

5. Modifiziertes Grafit-Dichtungssystem nach Anspruch 3, **gekennzeichnet dadurch, daß** die Metall-Lamellen/Glimmer-Schichtungen (11) mittels Spießblech (12) eingefaßt sind und sich mittig zwischen den Packungen, vorwiegend bei Flanschabdichtungen, ein Trägerblech (16) oder eine Edelstahlfolie (13) befindet.

6. Modifiziertes Grafit-Dichtungssystem nach Anspruch 1, **gekennzeichnet dadurch, daß** auch andere Weichstoffdichtungen durch die Metall-Lamellen/Glimmer-Schichtungen (1), (3) eingefaßt werden.

## Claims

1. Graphite sealing system **characterized in that** packings (8) with variable widths made of pure graphite (2) are bordered on either side by a composite material consisting of metal lamellas (14) and mica (15) whereby the said composite material has a bigger packing width towards the side facing the medium, compared with the opposite side.

2. Graphite sealing system according to claim 1 **characterized in that** a one-sided gap bridging, being less or equal 0.5 x packing width, is provided.

3. Graphite sealing system according to claim 1 **characterized in that** the packings made of pure graphite (10) are reinforced by metal inserts to form a flat packing being compounded from the lamella and mica layers (11).

4. Graphite sealing system according to claim 3 **characterized in that** the flat packing consists of spiral metal lamella inserts with bead (22), lamella and mica layers (21), pure graphite (20) and metal lamellas with bead (22).

5. Graphite sealing system according to claim 3 **characterized in that** the metal lamella and mica layers (11) are bordered by spiked metal sheets (12) and, in particular in case of flange sealing systems, a carrier sheet (16) or a stainless steel foil (13) is placed centrically between the individual packings.

6. Graphite sealing system according to claim 1 **characterized in that** also other soft material seals are bordered by the metal lamella and mica layers (1), (3).

## Revendications

1. Dispositif de joint graphite, **caractérisé en ce que** les garnitures de graphite pur (2), (8) en largeurs variables de garnitures sont bordées bilatéralement avec une matière composite, constituée de lamelles métalliques (14) et de mica (15), cette matière composite possédant sur le côté orienté en direction des fluides une plus grande largeur de garnitures que sur le côté opposé aux fluides.

2. Dispositif de joint graphite selon la revendication 1, **caractérisé en ce qu'**est prévu un recouvrement unilatéral de largeur de la fente ≤ 0,5 x largeur de garniture.

3. Dispositif de joint graphite selon la revendication 1, **caractérisé en ce que** les garnitures de graphite pur (10) sont renforcées métalliquement et sont constituées en joint plat en liaison avec les empilages (11) de lamelles métalliques et de mica.

4. Dispositif de joint graphite selon la revendication 3, **caractérisé en ce que** le joint plat est constitué de couches de lamelles de métal avec moulure (22), de couches de lamelles en métal et de mica (21), de graphite pur (20) et de lamelles de métal avec moulure (22) disposées de manière spiroïdale.

5. Dispositif de joint graphite selon la revendication 3, **caractérisé en ce que** les couches de lamelles en métal et de mica (11) sont bordées au moyen d'une tôle à aiguille (12) et qu'au milieu entre les garnitures, en particulier sur les joints de brides, se trouve une tôle de soutien (16) ou une feuille en acier fin (13).

6. Dispositif de joint graphite selon la revendication 1, **caractérisé en ce que** d'autres garnitures souples seront bordées par les couches de lamelles métalliques et de mica (1), (3).
